Europäisches Patentamt
European Patent Office
Office européen des brevets

(11) Publication number: 0 251 711 A2

# EUROPEAN PATENT APPLICATION

(21) Application number: 87305673.3

(22) Date of filing: 25.06.87

(51) Int. Cl.4: C08K 5/00, C08L 67/02

(30) Priority: 27.06.86 JP 151180/86

(43) Date of publication of application: 07.01.88 Bulletin 88/01

(84) Designated Contracting States: AT BE CH DE ES FR GB GR IT LI LU NL SE

(71) Applicant: POLYPLASTICS CO. LTD.
30 Azuchimachi 2-chome
Higashi-ku Osaka-shi(JP)

(72) Inventor: Nakatsuji, Hiroshi
91-19, Miyashita
Fuji-shi Shizuoka(JP)
Inventor: Nakai, Mikio
885-11, Miyajima
Fuji-shi Shizuoka(JP)
Inventor: Nakano, Michio
885-11, Miyajima
Fuji-shi Shizuoka(JP)

(74) Representative: Livsey, Gilbert Charlesworth Norris et al
HYDE, HEIDE & O'DONNELL 146 Buckingham Palace Road
London SW1W 9TR(GB)

## (54) Thermoplastic polyester resin composition.

(57) A thermoplastic polyester resin composition, having excellent heat stability and good stability in long-term high-temperature use comprises 100 parts by weight of a thermoplastic polyester blended with a synergistic mixture of firstly,

0.001 ~ 5 parts by weight of one or more phosphonite compounds expressed by the following formula (I):

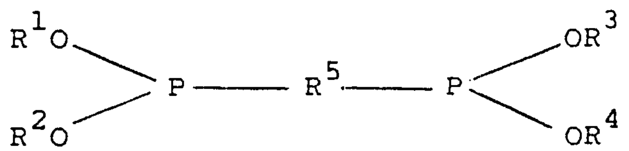

.... (I)

(in which $R^1$, $R^2$, $R^3$ and $R^4$ represent alkyl, substituted alkyl, aryl, or substituted aryl groups having 1 ~ 25 carbon atoms which may be identical with or different from one another, and $R^5$ represents an alkylene, substituted alkylene, arylene, or substituted arylene group having 4 ~ 33 carbon atoms), and secondly,

0.001 ~ 5 parts by weight of one or more hindered phenolic compounds.

The polyester resin may be blended with other thermoplastic resins and glass fillers; and it may also comprise organo-halogen compounds and organophosphorous compounds as flame retardants and metallic oxides or hydroxides as flame retarding auxiliaries.

EP 0 251 711 A2

# THERMOPLASTIC POLYESTER RESIN COMPOSITION

## Field of the Invention

This invention relates to a thermoplastic polyester resin composition having excellent heat stability and good stability in long-term high-temperature use. The resin composition in accordance with the invention can be advantageously in the form of outer components, elements of mechanisms or the like in automobile, machinery, building, electrical and electronic equipment, and other industries.

## Background to the Invention

Thermoplastic polyester resins are widely used in different industrial fields because of their excellent mechanical, physical, and chemical properties and because of their outstanding processability. However, with the development and diversification of applications for such resins, higher performance characteristics and special properties are often demanded of the resin. For example. the resin is often required to have good heat stability during molding or processing operations, at high temperatures or good stability to long-term use under high temperature conditions. In order to meet such requirements, it has been proposed to add to the thermoplastic polyester stabilisers such as phenolic compounds, amine compounds, phosphates, phosphonates, phosphoric esters, phosphites, or the like. Although such stabilisers may slightly improve the heat stability or long-term properties of the thermoplastic polyester, they are not a complete answer. Moreover, thermoplastic polyester resin compositions are often required to have flame retardant properties in addition to the aforesaid properties, and to this end it is usual either to incorporate a halogen compound, more particularly a bromine compound, into the molecular chain of the polyester through copolymerisation or to blend such compound with the polyester resin into a composition, using an antimony compound or the like as a flame retardant auxiliary. However, the presence of such flame retardant tends to deteriorate the polyester resin and this makes it all the more necessary that such a resin composition should have better stability characteristics and long-term properties in particular.

## Summary of the Invention

The invention provides a thermoplastic polyester resin composition having excellent heat stability and good long-term properties, comprising 100 parts by weight of a thermoplastic polyester blended with

(a) 0.001 ~ 5 parts by weight of one or more phosphonite compounds expressed by the formula (I):

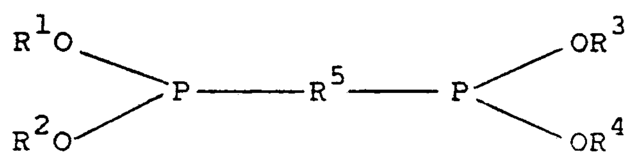

.... (I)

(in which $R^1$, $R^2$, $R^3$ and $R^4$ represent alkyl, substituted alkyl, aryl, or substituted aryl groups having 1 ~ 25 carbon atoms which may be identical with or different from one another, and $R^5$ represents an alkylene, substituted alkylene, arylene, or substituted arylene. group having 4 ~ 33 carbon atoms) and

(b) 0.001 ~ 5 parts by weight of one or more hindered phenolic compounds.

It has been found experimentally that while any phosphonite compound as above specified or any hindered phenolic compound, if added alone to a thermoplastic polyester resin, showed little effect by way of the improvement in heat stability and/or long-term properties of the resin, they exert a synergistic effect when they are present blended in the resin together and lead to a significant improvement in the heat stability and long-term properties of the resin.

Description of Preferred Features

The thermoplastic polyester used in the invention may be any polyester produced by polycondensation of a dicarboxylic acid compound and a dihydroxy compound, or of an oxycarboxylic acid compound, or polycondensation of a mixture of these three components, which includes any homopolyester or copolyester.

Dicarboxylic acid compounds useful for this purpose include, by way of example, various known dicarboxylic acid compounds, such as terephthalic acid, isophthalic acid naphthalene dicarboxylic acid, diphenyldicarboxylic acid, diphenylether dicarboxylic acid, diphenylethane dicarboxylic acid, cyclohexane dicarboxylic acid, adipic acid, and sebacic acid, and alkyl, alkoxy, or halogen substituents thereof. These dicarboxylic acid compounds may be used in the form of an esterifiable derivative, for example, a lower alcohol ester, such as a dimethyl ester. One or more dicarboxylic acid compounds may be present in the polyester.

Examples of dihydroxy compounds include ethylene glycol, propylene glycol, butanediol, neopentyl glycol, hydroquinone, resolcin, dihydroxyphenyl, naphthalene diol, dihydroxydiphenyl ether, cyclohexane diol, and 2,2-bis (4-hydroxyphenyl) propane, and alkyl, alkoxy, or halogen substituents of these dihydroxy compounds. One or more different such compounds may be used in admixture with one another to form the polyester.

Examples of oxycarboxylic acid compounds include oxybenzoate, oxynaphthoic acid, and diphenylene oxycarboxylic acid, and alkyl, alkoxy, or halogen substituents thereof. Esterifiable derivatives of these compounds may also be used. For the purpose of the invention, one or more different compounds may be used as such.

Any thermoplastic polyester produced by polycondensation of any such compound as above mentioned which is used as a monomer component is useful for the purposes of the invention. Such a polyester may be used either alone or in the form of a mixture of two or more different compounds. Preferably, polyalkylene terephthalate is used as such, or more preferably polybutylene terephthalate is used, to obtain good effects in this invention. Any completely aromatic polyester and any anisotropic melt-phase forming polyester are also advantageously used.

In the present invention, a thermoplastic polyester modified by a known technique, such as cross-linking, graft polymerisation, or the like, or depending upon the purpose for which the composition of the invention is used, a mixture of a thermoplastic polyester and a different kind of thermoplastic resin may also be used advantageously used as the base resin.

Examples of thermoplastic resins useful for mixture with such a thermoplastic polyester include polyethylene, polypropylene, ethylene-propylene copolymers, ethylene-vinyl acetate copolymers, ethylene-acrylic ester copolymers, polyamides, polyacetals, polystyrene, styrene-butadiene copolymers, styrene-butadiene-acrylonitrile copolymers, styrene-butadiene-acrylic acid (or ester thereof) copolymers, styrene-acrylonitrile copolymers, polycarbonates, polyurethanes, fluorine plastics, polyphenylene oxides, polyphenylene sulphides, polybutadiene, polyolefin halides, polyvinyl halides, butyl rubber, silicone resins, polyacrylate-based multigraft copolymers, and modifications of the foregoing resins. These optional substances may be selectively used, according to the properties desired for the composition, in any suitable proportion(s) in combination with the thermoplastic polyester.

Examples of possible values for $R^1$, $R^2$, $R^3$, and $R^4$ in Formula (1) include methyl, ethyl, butyl, octyl, decyl, lauryl, tridecyl, stearyl, phenyl, and alkyl-and/or alkoxy substituted phenyl groups. In formula (I), $R^5$ may represent an alkylene, substituted alkylene, arylene or substituted arylene group. Examples of these include butylene, octylene, phenylene, naphthylene, and diphenylene groups, and any groups expressed by the formula

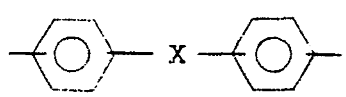

(in which X represents an oxy, sulphonyl, carbonyl, methylene, ethylidene, butylidene, isopropylene, or diazo group). A particularly preferred phosphonite compound is tetrakis-(2,4-di-t-butylphenyl)-4,4'-diphenylene phosphonite.

One or more different phosphonite compounds selected from among the compounds of formula (I) may be used for admixture with the thermoplastic polyester so that the composition contains 0.001 ~ 5 parts by weight of such compound relative to 100 parts by weight of the polyester (if the resin is added in the stage of polymerisation, 100 parts by weight of a polyester obtainable through reaction). If the proportion of such

compound is less than 0.001 part by weight, the heat stability and long-term properties are not satisfactory. Use of more than 5 parts by weight of such compound is economically unjustifiable because a saturation point has been reached beyond which no further heat stability improvement is expected. Furthermore, an excess of the compound of formula (I) is undesirable because it can significantly decrease the mouldability and strength characteristics of the polyester. From the standpoints of effective use for heat stability improvement, high temperature properties, and economy, such compound is preferably used in an amount of 0.01 ~ 1 parts by weight, or more preferably 0.03 - 0.5 parts by weight.

The hindered phenolic compound is a phenolic compound having a bulky substituent, for example, a substituent having at least four or more carbon atoms at a position adjacent to a phenolic hydroxyl group. Examples of such compounds include 2,6-di-t-butyl-4-methyl phenol, 4,4'-butylidene-bis(6-t-butyl-3-methyl phenol), 2,2'-methylene-bis (4-methyl-6-t-butyl phenol), 1,6-hexanediol-bis [3-(3,5-di-t-butyl-4-hydroxyphenyl) propionate], pentaerythritol-tetrakis [3-(3,5-di-t-butyl-4-hydroxyphenyl) propionate], triethylene glycol-bis[3-(3-t-butyl-5-methyl-hydroxyphenyl) propionate], and octadecyl-3-(3,5-di-t -butyl-4-hydroxyphenyl) propionate]. One or more different hindered phenolic compounds may be used in blend with the thermoplastic polyester in the proportion of 0.001 ~ 5 parts by weight relative to 100 parts by weight of the latter. If the proportion of such compound(s) is smaller than 0.001 part by weight, no synergistic effect of its use in combination with the phosphonite compound(s) is obtainable and the improvement in stability is small. Use of more than 5 parts by weight of such compound is undesirable because it is likely to lower the strength and moldability characteristics of the polyester. An optimum proportion of such compound may be determined depending upon the kind and relative proportions of the phosphonite compound to be used in combination therewith. Generally, a preferred proportion for addition of such compound is 0.01 ~ 1 part by weight, and more preferably it is 0.03 ~ 0.5 part by weight.

This invention is not only effective for improvement of the heat stability and long-term properties of a thermoplastic polyester resin composition containing no inorganic filler. It is also applicable with significant effect to a composition reinforced and modified by addition of a glass filler material or to a composition having flame retardant properties imparted thereto through incorporation of a flame retardant and a flame retarding auxiliary. Useful glass fillers include glass fibres, glass flakes, glass beads, milled fibreglass, and powdery glass, and they may be of any desired size and configuration according to the purpose for which they are used. In order to provide better bond with the resin and better reinforcing effect, these glass fillers may be surface treated with a finishing or coupling agent prior to addition or may be added simultaneously with such agent. Two or more kinds of glass fibres having different shapes may be used in combination in order to obtain their composite effect.

For use as flame retardants, organic halogen compounds and phosphoric compounds may be mentioned, and more especially aromatic bromine compounds are preferred. Typical examples of such compounds are low-molecular weight bromine compounds, such as 5 - 10 bromine substituted compounds of diphenyl ether; bromides of aromatic carbonates or epoxy compound monomers derived from bisphenol A, and polymers thereof; polystyrene oligomer bromides; and brominated cyanurate compounds. One or more different such compounds may be used in mixture with the resin. For use as flame retarding auxiliaries, metallic oxides and hydroxides, such as antimony trioxide, antimony halide, aluminium hydroxide, and magnesium hydroxide, may be mentioned. Generally, addition of such flame retarder and flame retarding auxiliary tends to adversely affect the heat stability characteristics of the thermoplastic polyester and accelerate the deterioration thereof. With flame-retarded polyester compositions, therefore, there are pressing needs for improvement of their heat stability characteristics. The present invention is effectively applicable to such flame-retarded polyester as well, with a remarkable advantage due to the presence of a particular phosphonite compound(s) in combination with a hindered phenolic compound(s).

Furthermore, depending on the purpose for which the composition of the invention is used, it is possible to incorporate by admixture into the composition various known substances which are usually added to conventional thermoplastic and/or thermosetting resins. These known substances include. for example, various kinds of stabilisers for light resisting and weathering purposes, colourants, release agents, plasticisers, nucleating agents, antistatic agents, surface active agents, and lubricants; also fibrous, lamellar, or granular, and powdery inorganic and organic compounds, such as carbon fibre, metallic fibre, boron fibre, potassium titanate, ceramics, micas, clay, talc, asbestos, highly dispersable silicates, ground quartz, silica sand, wollastonite, carbon black, graphite, various kinds of metallic powder, metallic foils, silicon carbide, boron nitride, and silicon nitride; whiskers and metallic whiskers.

The composition in accordance with this invention may easily be prepared by known techniques employed generally in the preparation of conventional resin compositions. For example, individual components can be mixed together, then the mixture is integrally extruded by an extruder, being thereby prepared into pellets, and subsequently the pellets are subjected to moulding. Another method is that pellets of

different compositions are first prepared and then mixed together in specified proportions, the mixture being subjected to moulding so that a molding of the desired composition is obtained. Another method is that one or more of the individual components are charged directly into the moulding machine. Any of these methods may be employed.

The particular phosphonite compounds and hindered phenolic compounds, as essential components in the present invention, may be added wholly or in part at any stage of the process, starting from raw stock, for thermoplastic polyester manufacturing and processing. Especially where these components are added into the stock at the monomer stage or at a comparatively early stage of polycondensation, being thereby caused to be present in the reaction system during the progress of polycondensation, polymerisation can be effectively performed, presumably because decomposition in the process of polymerisation may be inhibited. More particularly, where polycondensation under melt conditions is caused to proceed for an extended period in order to obtain a high-molecular weight polyester, or where after a melt reaction product is solidified, solid phase polymerisation is carried out for an extended period, the presence of aforesaid components in the reaction system contributes to preventing any property deterioration in the course of reaction and thus effectively facilitates production of a high-molecular weight polyester. To such end, aforesaid essential component should preferably be added prior to the polycondensation stage.

Examples

The invention is further illustrated in the following examples and comparative examples.

Examples 1 to 3: Comparative Examples 1 to 5

To 100 parts by weight of a polybutylene terephthalate having an inherent viscocity of 1.0 were added for mixture therewith 6 parts by weight of decabromodiphenyl ether, as a flame retardant, and 3 parts by weight of antimony trioxide, as a flame retardant auxiliary. and then a phosphonite compound and a hindered phenolic compound respectively having such compositions as specified in Table 1, were incorporated into the mixture. A composition in pellet form was prepared from the resulting mixture by employing a twin-screw extruder. Then, the pellets were moulded into ASTM tensile test pieces and colour-shade measuring flat bars by an injection moulder set to a cylinder temperature of 250°C. Tensile strength (initial value) and colour shade (initial value) measurements were made with these mouldings. Then, the test pieces were evaluated by the following method as to their stability to heat treatment.

Heat treatment method:

Test pieces (in required quantity) are placed in a gear oven set to 180°C and heat treated under hot air circulation.

Evaluation - 1 (strength retention percentage):

Five test pieces were removed after each predetermined period of heat treatment and their tensile strength standings were measured. Strength retention percentage was calculated according to the following formula:

$$\text{Strength retention (\%)} = \frac{\text{tensile strength after heat treatment}}{\text{initial tensile strength}} \times 100$$

Evaluation - (colour-shade change):

Colour shade of each test piece after a predetermined period of heat treatment was measured, and the degree of change in colour shade from the initial colour shade was determined according to the following equation:
Change in colour shade (Δ E) =

$$\sqrt{(L - L_o)^2 + (a - a_o)^2 + (b - b_o)^2}$$

where

$L_o$, $a_o$, $b_o$ .....initial colour shade
$L$, $a$, $b$ .....colour shade after heat treatment

Evaluation results are shown in Table 1.

Whilst, for comparison, similar tests were conducted with test pieces incorporating only one or the other of the phosphonite and hindered phenolic compounds and those incorporating neither of the both components.

The results are also shown in Table 1.

Notes to Table 1:

*1. tetrakis-(2.4-di-t-butylphenyl)-4.4'-diphenylene phosphonite
*2. pentaerythrityl-tetrakis[3-(3,5-di-t-butyl-4-hydroxyphenyl) propionate]
*3. heating at 180°C

Examples 4 ~ 6, Comparative Examples 6 ~ 10

Forty parts by weight of glass fibres (having an inner diameter of 13μ and a length of 6mm) were mixed with 100 parts by weight of a polybutylene terephthalate having an inherent viscosity of 0.75, and further a phosphonite compound and/or a hindered phenolic compound, respectively having such compositions as specified in Table 2, or other phosphorus compound were added thereto. Evaluation was made in same manner as in Examples 1 ~ 3, Comparative Examples I ~ 5.

Results are shown in Table 2.

Notes to Table 2:

*1. tetrakis-(2,4-di-t-butylphenyl)-4,4'-diphenylene phosphonite
*2. triethylene glycol bis [3-(3-t-butyl-5-methyl-4-hydroxyphenyl)propionate]
*3. heating at 180°C

Examples 7 ~ 8, Comparative Examples 11 ~ 13

Thirty parts by weight of glass fibres (having an inner diameter of 13μ and a length of 6mm), 30 parts by weight of glass flakes (of 48 mesh), 15 parts by weight of a bromine-based flame retardant, 10 parts by weight of antimony trioxide, and 12 parts by weight of a polycarbonate resin, were mixed with 100 parts by weight of a polybutylene terephthalate having an inherent viscosity of 0.75, and further a phosphonite compound and/or a hindered phenolic compound respectively having such compositions as specified in Table 3 were added thereto. Tests were made in same manner as in Examples 1 ~ 3 and Comparative Examples 1 ~ 5. Heat stability characteristics of these resin compositions under hot melt conditions were evaluated according to the following method.

Heat stability under hot melt conditions:

The resin was detained 30 minutes in a cylinder of a moulding machine set to 260°C, and then tensile strength test pieces were moulded from the resin.

Tensile strength measurement was made with the test pieces. Heat stability evaluation was made according to the following equation.

Heat stability (%) =

$$\frac{\text{tensile strength under 30 min. detention}}{\text{tensile strength under normal moulding}} \times 100$$

Results are shown in Table 3.

Example 9, Comparative Examples 14 ~ 16

To an anisotropic melt-phase forming completely aromatic polyester produced through a reaction between 70 mol % of 4-acetoxy benzoic acid and 30 mol % of 6-acetoxy-2-naphthoic acid were added a phosphonite compound and/or a hindered phenolic compound respectively having such compositions as specified in Table 4. Tests similar to those in Examples 1 ~ 3 and Comparative Examples 1 ~ 5 were carried out.

The polyester resin used had an inherent viscocity of 5.4 as measured in a pentafluorophenol of 0.1 wt % concentration at 60°C.

In the tests, heat treatment was made at 250°C.

Results are shown in Table 4.

Table 1

| | | Composition | | Tensile strength | | | | | | Color shade | |
|---|---|---|---|---|---|---|---|---|---|---|---|
| | | Heat stability improver | Concentration (parts by wt.) | Initial value ($kg/cm^2$) | Strength retention percent (%) after heat treatment *3 | | | | | Initial color shade $L_0/a_0/b_0$ | Change in color shade after 5-day heat treatment *3 ($\Delta E$) |
| | | | | | 5 days | 10 days | 20 days | 30 days | 40 days | | |
| Example | 1 | Phosphonite compound *1<br>Hindered phenolic compound *2 | 0.05<br>0.05 | 562 | 104 | 104 | 95 | 82 | 70 | 91.3/-0.5/3.9 | 21.1 |
| | 2 | Phosphonite compound *1<br>Hindered phenolic compound *2 | 0.1<br>0.1 | 565 | 103 | 104 | 99 | 83 | 74 | 91.2/-0.5/4.0 | 19.1 |
| | 3 | Phosphonite compound *1<br>Hindered phenolic compound *2 | 0.2<br>0.2 | 564 | 106 | 104 | 100 | 94 | 87 | 91.3/-0.5/4.0 | 14.6 |
| Comp. Example | 1 | Phosphonite compound *1 | 0.1 | 563 | 104 | 93 | 72 | 58 | 50 | 91.3/-0.5/4.0 | 35.4 |
| | 2 | Phosphonite compound *1 | 0.2 | 565 | 105 | 97 | 75 | 64 | 54 | 91.4/-0.5/3.8 | 28.0 |
| | 3 | Hindered phenolic compound *2 | 0.1 | 567 | 92 | 76 | 64 | 52 | 45 | 91.1/-0.4/4.0 | 41.2 |
| | 4 | Hindered phenolic compound *2 | 0.2 | 562 | 95 | 80 | 63 | 55 | 48 | 91.2/-0.5/4.1 | 40.3 |
| | 5 | — | – | 561 | 93 | 74 | 63 | 50 | 44 | 90.8/-0.4/4.1 | 44.8 |

Table 2

| | | Composition | | Tensile strength | | | | | | Color shade | |
|---|---|---|---|---|---|---|---|---|---|---|---|
| | | Heat stability improver | Concentration (parts by wt.) | Initial value ($kg/cm^2$) | Strength retention percent (%) after heat treatment *3 | | | | | Initial color shade $L_o/a_o/b_o$ | Change in color shade after 50-day heat treatment *3 ($\Delta E$) |
| | | | | | 10 days | 20 days | 30 days | 40 days | 50 days | | |
| Example | 4 | Phosphonite compound *1<br>Hindered phenolic compound *2 | 0.15<br>0.15 | 1357 | 112 | 107 | 102 | 95 | 90 | 78.2/-1.7/6.5 | 14.1 |
| | 5 | Phosphonite compound *1<br>Hindered phenolic compound *2 | 0.3<br>0.15 | 1361 | 109 | 108 | 101 | 97 | 93 | 78.2/-1.7/6.6 | 11.9 |
| | 6 | Phosphonite compound *1<br>Hindered phenolic compound *2 | 0.3<br>0.3 | 1352 | 110 | 107 | 104 | 96 | 94 | 78.4/-1.8/6.5 | 12.3 |
| Comp. Example | 6 | Phosphonite compound *1 | 0.3 | 1345 | 108 | 105 | 94 | 84 | 73 | 78.5/-1.8/6.5 | 17.2 |
| | 7 | Hindered phenolic compound *2 | 0.3 | 1363 | 108 | 102 | 85 | 73 | 63 | 78.3/-1.7/6.5 | 24.3 |
| | 8 | Tridecyl phosphite<br>Hindered phenolic compound *2 | 0.3<br>0.3 | 1357 | 107 | 104 | 92 | 77 | 65 | 78.2/-1.8/6.5 | 22.8 |
| | 9 | Triphenyl phosphite<br>Hindered phenolic compound *2 | 0.3<br>0.3 | 1348 | 110 | 105 | 90 | 76 | 65 | 78.4/-1.8/6.6 | 23.5 |
| | 10 | —— | – | 1362 | 106 | 101 | 86 | 72 | 61 | 78.3/-1.7/6.6 | 26.7 |

Table 3

| | | Composition | | Tensile strength | | | | | Heat stability under melt conditions *4 (%) |
|---|---|---|---|---|---|---|---|---|---|
| | | Heat stability improver | Concentration (parts by wt.) | Initial value ($kg/cm^2$) | Strength retention percent (%) after heat treatment *3 | | | | |
| | | | | | 10 days | 20 days | 30 days | 40 days | |
| Example | 7 | Phosphonite compound *1<br>Hindered phenolic compound *2 | 0.2<br>0.2 | 1280 | 102 | 95 | 85 | 80 | 78 |
| | 8 | Phosphonite compound *1<br>Hindered phenolic compound *2 | 0.4<br>0.4 | 1284 | 103 | 95 | 88 | 81 | 82 |
| Comp. Example | 11 | Phosphonite compound *1 | 0.4 | 1274 | 97 | 84 | 70 | 61 | 61 |
| | 12 | Hindered phenolic compound *2 | 0.4 | 1281 | 95 | 75 | 62 | 54 | 53 |
| | 13 | —— | – | 1275 | 95 | 74 | 63 | 52 | 53 |

Notes)
*1: tetrakis(2,4-di-ti-butylphenyl)-4,4'-diphenylene phosphonite
*2: 1,6-hexanediol bis[3-(3,5-di-t-butyl-4-hydroxyphenyl) propionate]
*3: heating at 180°C
*4: melt detention (for 30 min.) in the molder cylinder set to 260°C

Table 4

| | | Composition | | Tensile strength | | | | |
|---|---|---|---|---|---|---|---|---|
| | | Heat stability improver | Concentration (parts by wt.) | Initial value ($kg/cm^2$) | Strength retention percent (%) after heat treatment *3 | | | |
| | | | | | 20 days | 50 days | 100 days | 150 days |
| Example | 9 | Phosphonite compound *1<br>Hindered phenolic compound *2 | 0.2<br>0.2 | 2123 | 110 | 108 | 96 | 82 |
| Comp. Example | 14 | Phosphonite compound *1 | 0.2 | 2118 | 107 | 109 | 81 | 67 |
| | 15 | Hindered phenolic compound *2 | 0.2 | 2126 | 110 | 108 | 73 | 61 |
| | 16 | — | — | 2102 | 108 | 106 | 70 | 62 |

Notes) *1: tetrakis(2,4-di-t-butylphenyl)-4,4'-diphenylene phophonite

*2: pentaerythrityl-tetrakis[3-(3,5-di-t-butyl-4-hydroxyphenyl) propionate]

*3: heating at 250°C

## Claims

1. A thermoplastic polyester resin composition comprising 100 parts by weight of a thermoplastic polyester blended with

a) 0.001 ~ 5 parts by weight of one or more phosphonite compounds represented by the general formula (I):

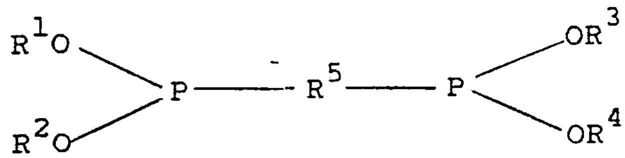 .... (I)

(in which $R^1$, $R^2$, $R^3$, and $R^4$ represent alkyl, substituted alkyl, aryl, or substituted aryl groups having 1 ~ 25 carbon atoms which may be identical with or different from one another, and $R^5$ represents an alkylene, substituted alkylene, arylene, or substituted arylene group having 4 ~ 33 carbon atoms),

and

b) 0.001 ~ 5 parts by weight of one or more different hindered phenolic compounds.

2. The composition of claim 1, wherein the phosphonite compound is

a) teretakis-(2,4-di-t-butylphenyl)-4,4′-diphenylene phosphonite,

or

b) a compound of formula (I) wherein $R^1$, $R^2$, $R^3$, and $R^4$ represent methyl, ethyl, butyl, octyl, decyl, lauryl, tridecyl, stearyl, phenyl, and alkyland/or alkoxy substituted phenyl groups and $R^5$ represents butylene, octylene, phenylene, naphthylene, and diphenylene groups, or any groups expressed by the formula

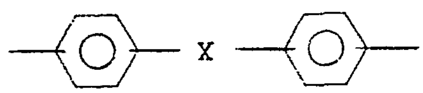

(in which X represents an oxy, sulfonyl, carbonyl, methylene, ethylidene, butylidene, isopropylene, or diazo group).

3. The composition of either of claims 1 or 2, wherein the phosphonite compound is present in an amount of 0.03 ~ 0.5 parts by weight.

4. The composition of any of claims l to 3, wherein the hindered phenolic compound is selected from
2,6-di-t -butyl-4-methyl phenol,
4,4′-butylidene-bis(6-t-butyl-3-methyl phenol),
2,2′-methylene-bis(4-methyl-6-t -butyl phenol),
1,6-hexanediol-bis[3-(3,5-di-t-butyl-4-hydroxyphenyl) propionate].
pentaerythritol-tetrakis[3-(3,5-di-t-butyl-4-hydroxyphenyl) propionate],
triethyleneglycol-bis[3-(3-t-butyl-5-methyl-hydroxyphenyl) propionate], and
octadecyl-3-(3,5-di-t-butyl-4-hydroxyphenyl) propionate].

5. The composition of any preceding claim, wherein the hindered phenolic compound is present in an amount of 0.03 ~ 0.5 parts by weight.

6. The composition of any preceding claim, further comprising glass fibres, glass flakes, glass beads, milled fibreglass or powdered glass.

7. The composition of any preceding claim, further comprising a flame retardant which is an organohalogen compound or an organophosphorous compound.

8. The composition of claim 7, further comprising a flame retardant which is a metallic oxide or hydroxide.

9. The composition of any preceding claim, wherein the thermoplastic polyester is selected from

a) polybutylene terephthalate;

b) a polyalkylene terephthalate other than (a);

c) a completely aromatic polyester;

d) a polyester that forms an anisotropic melt phase: and

e) a mixture of a polyester with a second thermoplastic resin which is polyethylene, polypropylene, an ethylene-propylene copolymer, an ethylene-vinyl acetate copolymer, an ethylene-acrylic ester copolymer, a polyamide, a polyacetal, polystyrene, a styrene-butadiene copolymer, a styrene-butadiene-acrylonitrile copolymer, a styrene-butadiene-acrylic acid (or ester thereof) copolymer, a styrene-acrylonitrile copolymer, a polycarbonate, a polyurethane, a fluorine plastic, a polyphenylene oxide, a polyphenylene sulphide, polybutadiene, a polyolefin halide, a polyvinyl halide, butyl rubber, a silicone resin, a polyacrylate-based multigraft copolymer, or a modification of the foregoing resins.

10. The composition of any preceding claim, wherein the phosphonite compound and the hindered phenolic compound have been present in the thermoplastic polyester from the monomer stage of its preparation or from an early stage of polycondensation.